# EUROPEAN PATENT APPLICATION

(11) **EP 4 832 640 A1**
(43) Date of publication of application: **28.10.2026**
(21) Application number: 25745286.2
(22) Date of filing: 21.01.2025
(51) Int. Cl.: H04W 74/00, H04W 74/0808, H04J 3/16, H04W 84/12, H04W 88/02

(54) **CHANNEL ACCESS IN MULTI-AP OPERATION IN WIRELESS LAN SYSTEM**

(30) Priority: 23.01.2024 KR 20240010420
(71) Applicant: LG Electronics Inc., Yeongdeungpo-gu Seoul 07336 (KR)
(72) Inventor: KIM, Geonhwan, Seoul 06772 (KR); CHA, Dongju, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR)
(74) Representative: Plasseraud IP
(86) International application number: PCT/KR2025/099116
(87) International publication number: WO 2025/159621

(57) **Abstract**

The present disclosure relates to channel access in a multi-AP operation in a wireless LAN system. According to an embodiment of the present disclosure, a method performed by a first AP configured to operate in a wireless LAN system comprises the steps of: performing a negotiation procedure for multi-AP cooperation with a second AP; after performing the negotiation procedure, performing, with at least one station (STA) associated with the first AP, a disablement procedure for disabling a channel access to at least one secondary channel related to the multi-AP cooperation; disabling the channel access to the at least one secondary channel on the basis of the disablement procedure; and performing frame exchange with the at least one STA associated with the first AP on the basis of the multi-AP cooperation while the channel access to the at least one secondary channel is disabled.

## Description

### Technical field

The present disclosure is related to channel access in multi-access point (AP) operation in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, an AP/STA may access a secondary channel when a primary channel is already occupied, and this may be referred to as secondary channel access (SCA). In multi-AP operation, SCA may be an issue.

### Disclosure of Invention

### Technical Problem

An aspect of the present disclosure is to provide method and apparatus for channel access in multi-AP operation in a WLAN system.

### Solution to Problem

According to an embodiment of the present disclosure, a method performed by a first AP configured to operate in a wireless LAN system comprises: performing a negotiation procedure for multi-AP coordination with a second AP; after performing the negotiation procedure, performing a disablement procedure for disabling channel access to at least one secondary channel related to the multi-AP coordination, with at least one station (STA) associated with the first AP; disabling channel access to the at least one secondary channel based on the disablement procedure; and while channel access to the at least one secondary channel is disabled, performing frame exchange with the at least one STA associated with the first AP based on the multi-AP coordination.

According to an embodiment of the present disclosure, a method performed by a STA configured to operate in a wireless LAN system comprises: after a negotiation procedure for multi-AP coordination is performed between a first access point (AP) associated with a station (STA) and a second AP, performing a disablement procedure for disabling channel access to at least one secondary channel related to the multi-AP coordination, with the first AP; disabling channel access to the at least one secondary channel based on the disablement procedure; and while channel access to the at least one secondary channel is disabled, performing frame exchange with the first AP associated with the STA based on the multi-AP coordination.

In various embodiments, apparatuses implementing the above methods are provided.

### Advantageous Effect

The present disclosure may have various advantageous effects.

For example, by performing the SCA disablement proposed in the present disclosure, APs participating in multi-AP coordination may selectively disable an SCA mode, and thus may successfully perform multi-AP coordination-based transmission on a primary channel (PCH).

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 illustrates an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 illustrates an example of a multi-link (ML).
FIG. 5 illustrates a modified example of a transmitting device and/or a receiving device of the present disclosure.
FIG. 6 illustrates an example of a physical protocol data unit or physical layer (PHY) protocol data unit (PPDU) transmitted/received by an STA of the present disclosure.
FIG. 7 illustrates the layout of resource units (RUs) used for a 20 MHz PPDU.
FIG. 8 illustrates the layout of resource units (RUs) used for 40MHz PPDU.
FIG. 9 illustrates the layout of resource units (RUs) used for an 80MHz PPDU.
FIG. 10 illustrates an operation related to UL-MU.
FIG. 11 illustrates an example of channels used/supported/defined within the 2.4 GHz band.
FIG. 12 illustrates an example of channels used/supported/defined within the 5 GHz band.
FIG. 13 illustrates an example of channels used, supported, and defined within the 6 GHz band.
FIG. 14 illustrates an EDCA-based channel access method.
FIG. 15 illustrates a backoff operation/procedure of EDCA.
FIG. 16 illustrates a backoff operation.
FIG. 17 illustrates an example of a procedure related to NAV setting.
FIG. 18 illustrates a trigger frame format.
FIG. 19 illustrates an example of the User Info field format of the MU-RTS TXS TF.
FIG. 20 shows an example of an operation diagram of single TXOP-based coordinated time division multiple access (Co-TDMA) between coordinating APs.
FIG. 21 illustrates an example of SCA performed in the Co-TDMA operation.
FIG. 22 illustrates an example of a method performed by an AP for channel access in a multi-AP operation according to an embodiment of the present disclosure.
FIG. 23 illustrates an example of a method performed by a STA for channel access in a multi-AP operation according to an embodiment of the present disclosure.
FIG. 24 illustrates an example of a negotiation procedure for a multi-AP operation according to an embodiment of the present disclosure.
FIG. 25 illustrates an example of an SCA disablement procedure according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

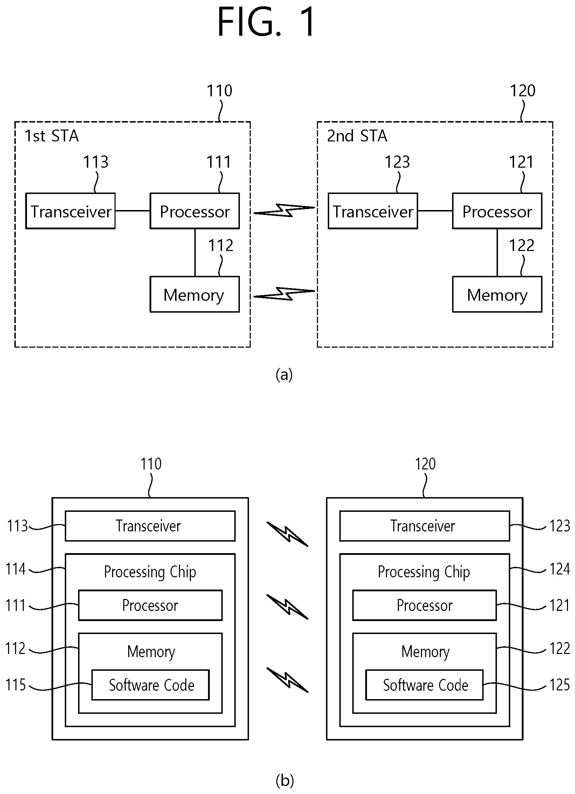

FIG. 1 illustrates an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGON^{®} series of processors made by Qualcomm^{®}, EXYNOS^{®} series of processors made by Samsung^{®}, A series of processors made by Apple^{®}, HELIO^{®} series of processors made by MediaTek^{®}, ATOM^{®} series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

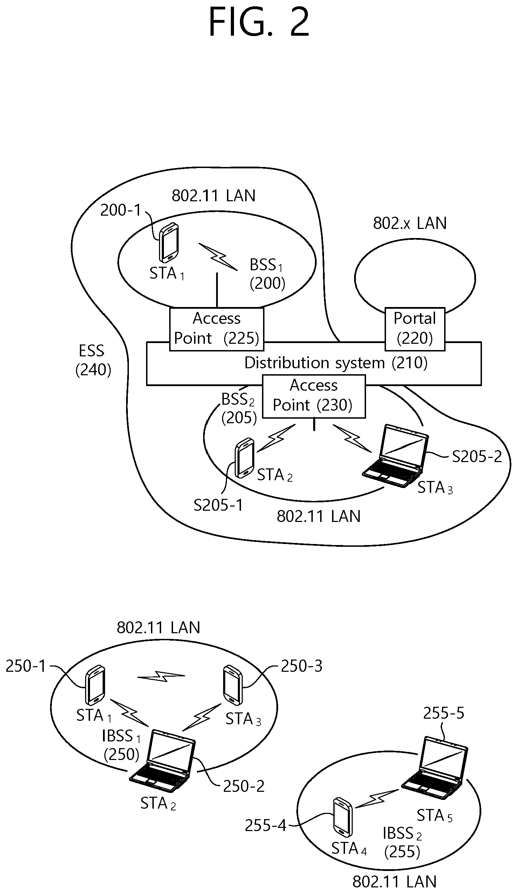

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

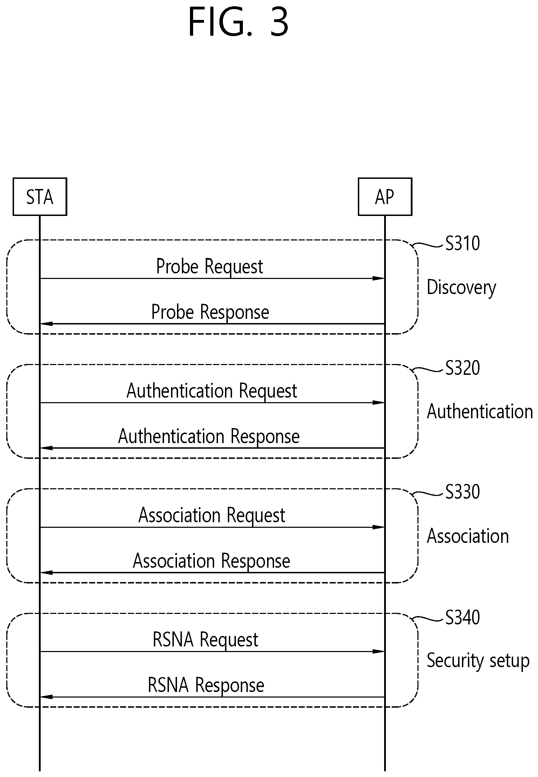

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

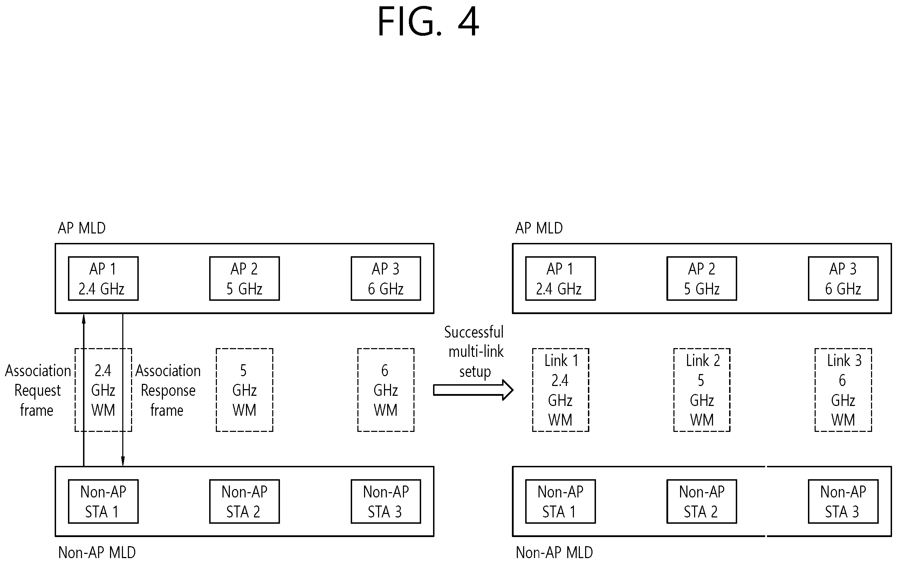

FIG. 4 illustrates an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

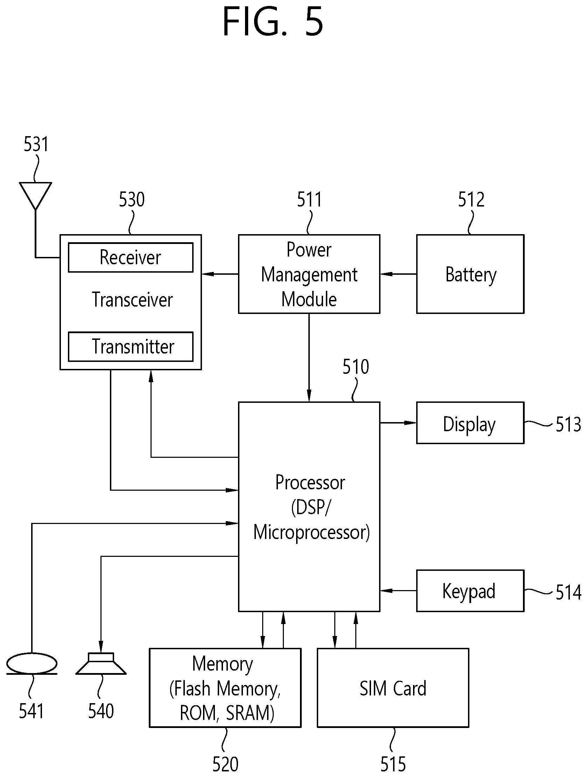

FIG. 5 illustrates a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor 510 of FIG. 5 can be identical to the processor 111, 121 of FIG. 1. Alternatively, the processor 510 of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor 510. The keypad 514 receives input to be used by the processor 510. The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor 510. The microphone (541) may receive sound-related input to be used by the processor 510.

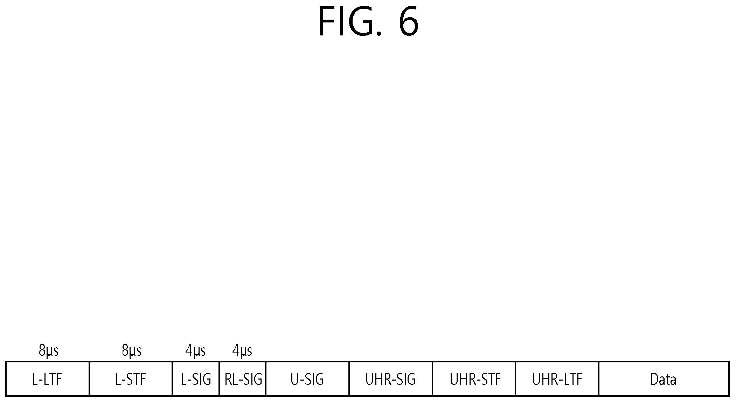

FIG. 6 illustrates an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 6. The PPDU described in the present disclosure can have, for example, a structure of FIG. 6. In addition, the PPDU described in the present disclosure can be called by various names such as a transmission PPDU, a reception PPDU, a first type or an Nth type PPDU, etc. The PPDU described in the present disclosure can be used in a WLAN system defined according to IEEE 802.11bn and/or a next-generation WLAN system that improves IEEE 802.11bn.

The PPDU of FIG. 6 can be related to various PPDU types used in a UHR system. For example, the example of FIG. 6 can be used for at least one of single-user (SU) mode/type/transmission, multi-user (MU) mode/type/transmission, and null-data packet (NDP) mode/type/transmission related to channel sounding. For example, if the example of FIG. 6 is related to NDP, the data field illustrated can be omitted. If the PPDU of FIG. 6 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 6.

In FIG. 6, L-STF or UHR-LTF may be called a preamble or a physical preamble, and may be generated/transmitted/received/acquired/decoded in the physical layer (included in the transmitting/receiving STA).

Each block illustrated in FIG. 6 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 6.

A subcarrier spacing of the L-STF, L-LTF, L-SIG, RL-SIG, U-SIG, and UHR-SIG fields of FIG. 6 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 6, the L-LTF and the L-STF may be the same as those in the conventional fields (for example, non-HT LTF and non-HT STF defined in conventional WLAN standards).

The L-SIG field of FIG. 6 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (CBF), spatial reuse (SR), type related to coordinated OFDMA (C-OFDMA), type related to coordinated TDMA (CTDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 6. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 6 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 6 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

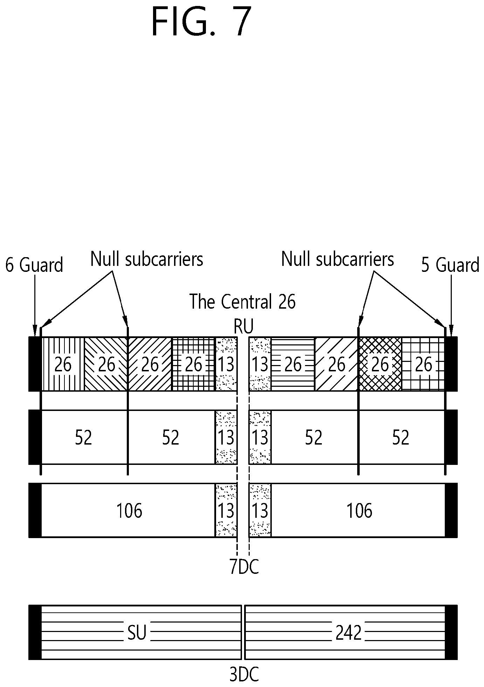

FIG. 7 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 7.

As illustrated in the uppermost part of FIG. 7, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 7 may be used not only for a multiple users (MUs) but also for a single user (SU), in which case one 242-unit may be used and three DC tones may be inserted as illustrated in the lowermost part of FIG. 7.

Although FIG. 7 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

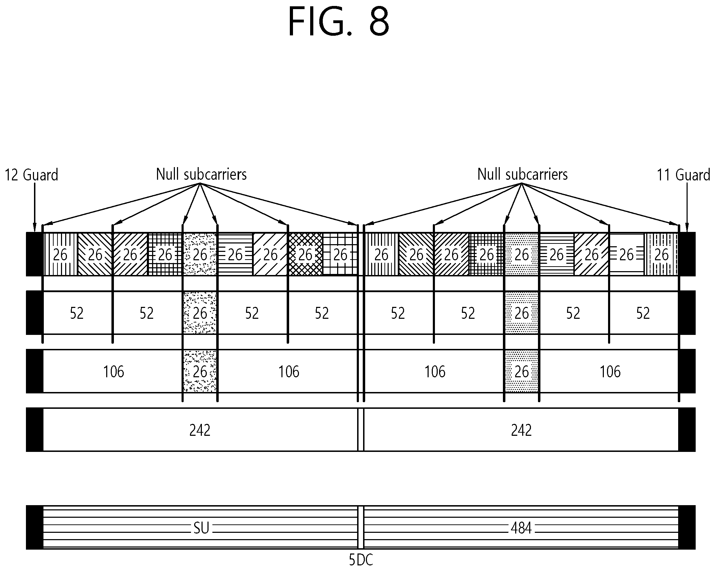

FIG. 8 illustrates the layout of resource units (RUs) used for 40MHz PPDU.

Similarly to FIG. 7 in which RUs having various sizes are used, a 26-RU, a 52-RU, a 106-RU, a 242-RU, a 484-RU, and the like may be used in an example of FIG. 8. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 8, when the layout of the RUs is used for a single user, a 484-RU may be used. The specific number of RUs may be changed similarly to FIG. 7.

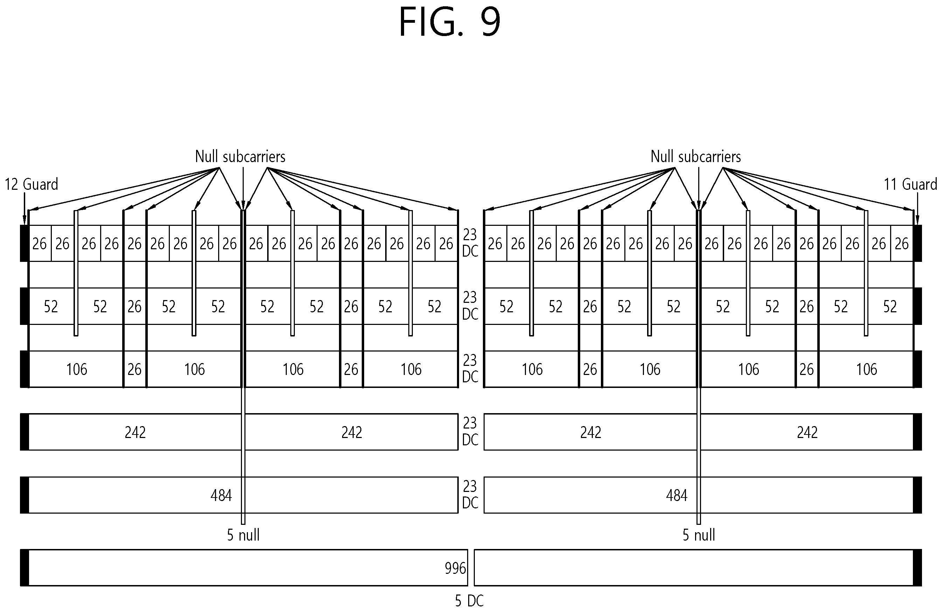

FIG. 9 illustrates the layout of resource units (RUs) used for an 80MHz PPDU. The layout of the resource units (RUs) used in the present disclosure may vary. For example, the layout of the resource units (RUs) used in the 80MHz band may vary.

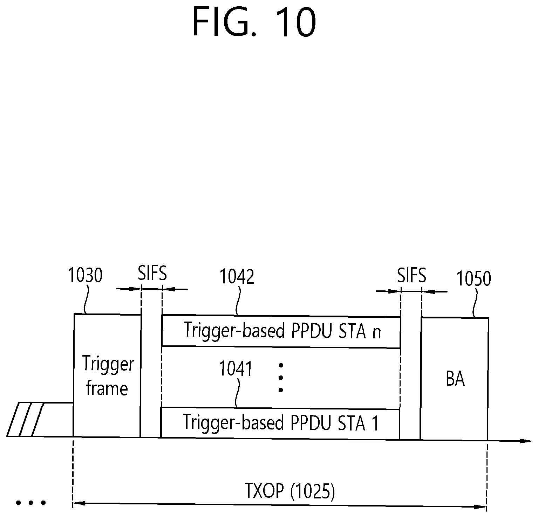

FIG. 10 illustrates an operation related to UL-MU. As shown, a transmitting STA (e.g., AP) can obtain TXOP 1025 by performing channel access through contending (i.e., backoff operation) and transmit trigger frame 1030. That is, the transmitting STA (e.g., AP) can transmit PPDU including trigger frame 1030. When PPDU including trigger frame is received, trigger-based (TB) PPDU is transmitted after delay of SIFS.

TB PPDU 1041, 1042 can be transmitted at the same time and transmitted from multiple STA (e.g., user STA) whose AID is indicated in trigger frame 1030. ACK frame 1050 for TB PPDU can be implemented in various forms. For example, ACK frame 1050 for TB PPDU can be implemented in the form of block ACK (BA).

In FIG. 10, transmission(s) of trigger Frame 1030, TB PPDU 1041, 1042 and/or ACK Frame 1050 can be performed within TXOP 1025.

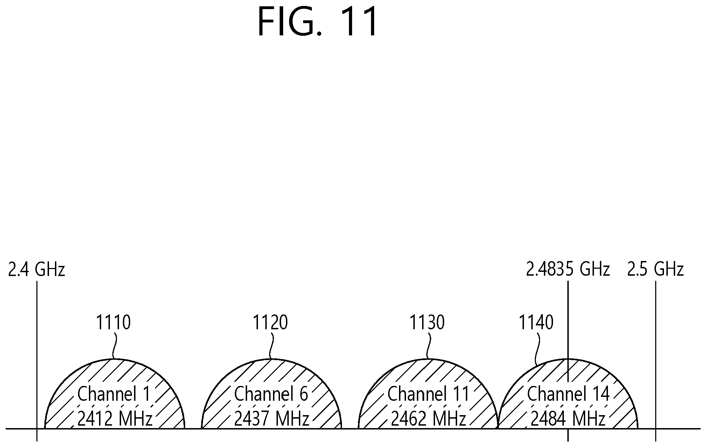

FIG. 11 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 11 illustrates examples of four channels within the 2.4 GHz band. The illustrated first frequency region 1110 to fourth frequency regions 1140 may each include one channel. For example, the first frequency region 1110 may include channel 1 (a 20 MHz channel with index 1). In this case, the center frequency of channel 1 may be set to 2412 MHz. The second frequency range 1120 may include channel 6. The center frequency of channel 6 may be set to 2437 MHz. The third frequency range 1130 may include channel 11. The center frequency of channel 11 may be set to 2462 MHz. The fourth frequency range 1140 may include channel 14. The center frequency of channel 14 may be set to 2484 MHz.

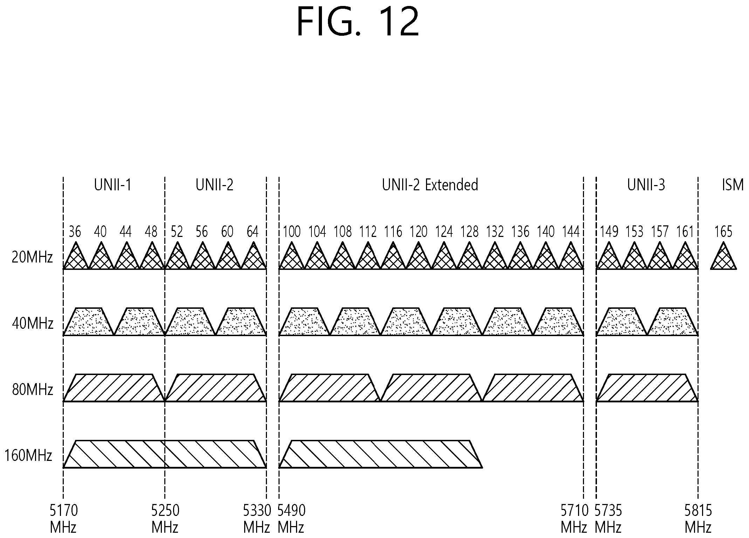

FIG. 12 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 12 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

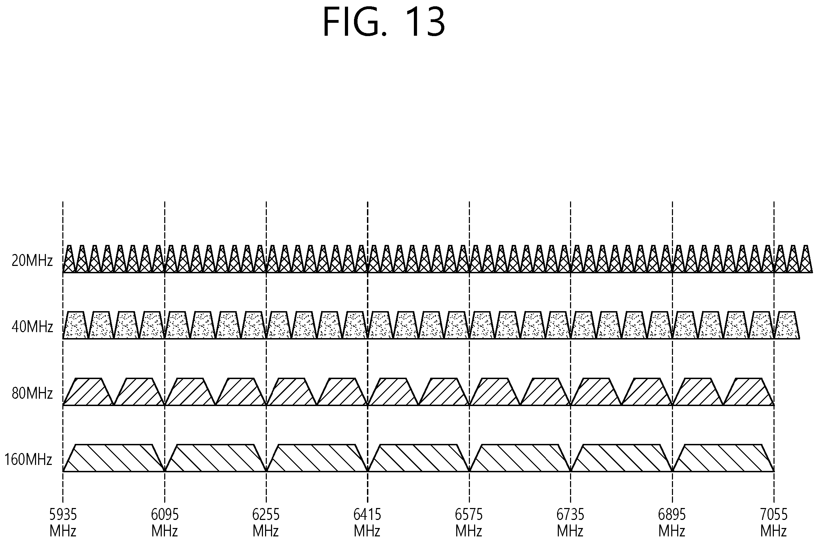

FIG. 13 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 13 may vary.

For example, the 20 MHz channel in FIG. 13 may be defined starting from 5.940 GHz. Specifically, the leftmost channel among the 20 MHz channels in FIG. 13 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 13 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 13 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

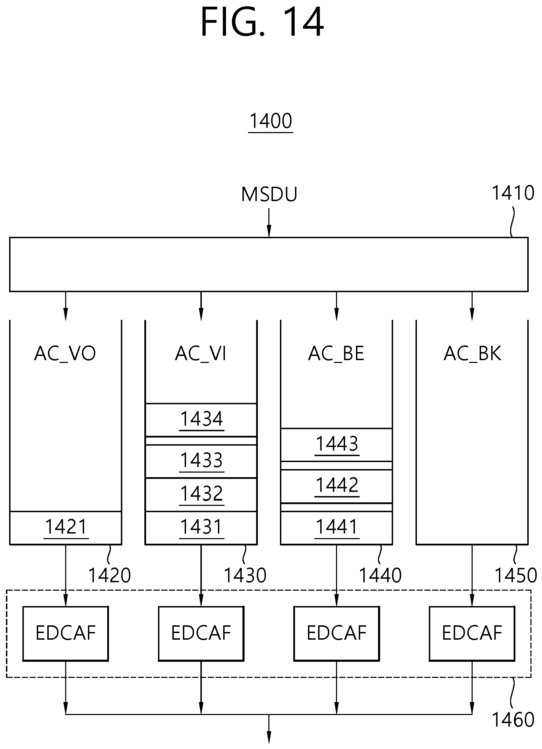

FIG. 14 illustrates an EDCA-based channel access method. In a wireless LAN system, a STA may perform channel access according to a plurality of user priorities defined for enhanced distributed channel access (EDCA).

Specifically, for transmission of quality of service (QoS) data frames based on the plurality of user priorities, four access categories (AC) (AC_BK (background), AC_BE (best effort), AC_VI (video), AC_VO (voice)) may be defined.

The STA may receive traffic data (e.g., a MAC service data unit (MSDU)) having a preset user priority from a higher layer.

For example, to determine a transmission order of MAC frames to be transmitted by the STA, a differential value may be set in the user priority for each traffic data. The user priority may be mapped with each access category (AC) in which the traffic data is buffered, in a manner as shown in Table 4 below.

**[Table 4]**

| Priority | User priority | Access category (AC) |
|---|---|---|
| Lowest | 1 | AC_BK |
| | 2 | AC_BK |
| | 0 | AC_BE |
| | 3 | AC_BE |
| | 4 | AC_VI |
| | 5 | AC_VI |
| | 6 | AC_VO |
| Highest | 7 | AC_VO |

In the present disclosure, the user priority may be construed as a traffic identifier ('TID' hereinafter) indicating a characteristic of traffic data. Referring to Table 4, traffic data whose user priority (i.e., TID) is '1' or '2' may be buffered into a transmission queue 1450 of an AC_BK type. Traffic data whose user priority (i.e., TID) is '0' or '3' may be buffered into a transmission queue 1440 of an AC_BE type.

Traffic data whose user priority (i.e., TID) is '4' or '5' may be buffered into a transmission queue 1430 of an AC_VI type. Traffic data whose user priority (i.e., TID) is '6' or '7' may be buffered into a transmission queue 1420 of an AC_VO type.

Instead of distributed coordination function (DCF) interframe space (DIFS), CWmin, and CWmax, which are parameters for a backoff operation/procedure based on an existing DCF, an EDCA parameter set of arbitration interframe space (AIFS) [AC], CWmin[AC], CWmax[AC], and TXOP limit[AC] may be used for a backoff operation/procedure of a STA performing EDCA.

Based on the differential EDCA parameter set, a difference in transmission priority between ACs may be implemented. Default values of the EDCA parameter set corresponding to each AC (i.e., AIFS[AC], CWmin[AC], CWmax[AC], TXOP limit[AC]) are exemplarily shown in Table 5 below. Specific values in Table 5 may be set differently from the following.

**[Table 5]**

| AC | CWmin[AC] | CWmax[AC] | AIFS[AC] | TXOP limit[AC] |
|---|---|---|---|---|
| AC_BK | 31 | 1023 | 7 | 0 |
| AC_BE | 31 | 1023 | 3 | 0 |
| AC_VI | 15 | 31 | 2 | 3.008ms |
| AC_VO | 7 | 15 | 2 | 1.504ms |

The EDCA parameter set for each AC may be set to a default value or may be delivered from an access point (AP) to each STA by being included in a beacon frame. The smaller the values of AIFS[AC] and CWmin[AC], the higher the priority, and accordingly the channel access delay becomes shorter, so that more bands can be used in a given traffic environment. The EDCA parameter set may include information for channel access parameters (e.g., AIFS[AC], CWmin[AC], CWmax[AC]) for each AC.

The backoff operation/procedure for EDCA may be performed based on the EDCA parameter set individually set to the four ACs included in each STA. Appropriate setting of the EDCA parameter values defining different channel access parameters for each AC may optimize network performance and, at the same time, increase the transmission effect according to the priority of the traffic.

Therefore, the AP of the wireless LAN system must perform an overall management and adjustment function for the EDCA parameters in order to ensure fair medium access to all STAs participating in the network.

Referring to FIG. 14, a STA (or AP) 1400 may include a virtual mapper 1410, a plurality of transmission queues 1420 to 1450, and a virtual collision handler 1460. The virtual mapper 1410 of FIG. 14 may serve to map the MSDU received from a logical link control (LLC) layer to a transmission queue corresponding to each AC according to Table 1 above.

The plurality of transmission queues 1420 to 1450 of FIG. 14 may serve as individual EDCA contention entities for wireless medium access within a STA (or AP).

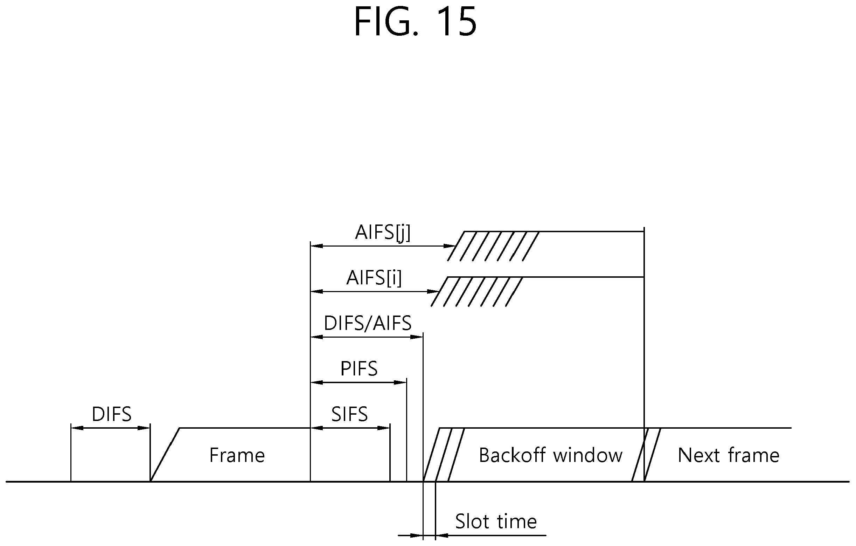

FIG. 15 illustrates a backoff operation/procedure of EDCA.

A plurality of STAs may share a wireless medium based on the DCF, which is a contention-based function. The DCF may use CSMA/CA to coordinate collisions between STAs.

In the channel access scheme using the DCF, if the medium is not used during a DCF inter frame space (DIFS) (i.e., the channel is idle), the STA may transmit an internally determined MPDU. The DIFS is a kind of time length used in the IEEE standard, and the IEEE standard uses various time intervals such as a slot time, a Short Inter-frame Space (SIFS), a PCF Inter-frame Space (PIFS), a DIFS, and an arbitration interframe space (AIFS). Specific values of each time interval may be set variously, but generally the lengths are set to become longer in the order of the slot time, SIFS, PIFS, DIFS, and AIFS.

When it is determined by the carrier sensing mechanism of the STA that the wireless medium is used by another STA (i.e., the channel is busy), the STA may determine the size of a contention window ('CW' hereinafter) and perform a backoff operation/procedure.

To perform the backoff operation/procedure, each STA may set a backoff value arbitrarily selected within the contention window (CW) in a backoff counter.

Each STA may perform the backoff operation/procedure for channel access by counting down the backoff window in units of slot time. Among the plurality of STAs, the STA that has selected the relatively shortest backoff window may obtain a transmission opportunity ('TXOP' hereinafter), which is an opportunity to occupy the medium.

During the time duration for the transmission opportunity (TXOP), the remaining STAs may stop the countdown operation. The remaining STAs may wait until the time duration for the transmission opportunity (TXOP) ends. After the time duration for the transmission opportunity (TXOP) ends, the remaining STAs may resume the stopped countdown operation to occupy the wireless medium.

According to such a DCF-based transmission method, a collision that may occur when a plurality of STAs simultaneously transmit frames can be prevented. However, the channel access scheme using the DCF does not consider transmission priority (i.e., user priority). That is, when the DCF is used, the quality of service (QoS) of the traffic to be transmitted by the STA cannot be guaranteed.

To solve this problem, 802.11e defined a hybrid coordination function ('HCF' hereinafter), which is a new coordination function. The newly defined HCF has improved performance compared to the channel access performance of the existing DCF. The HCF may use two channel access schemes together, namely, the polling-based HCF controlled channel access (HCCA) and the contention-based enhanced distributed channel access (EDCA), for the purpose of QoS improvement.

Referring to FIG. 15, it is assumed that a STA performs EDCA for transmission of traffic data buffered in the STA. Referring to Table 5, the user priority set in each traffic data may be differentiated into 8 levels.

Each STA may include output queues of four types (AC_BK, AC_BE, AC_VI, AC_VO) mapped with the 8 levels of user priority in Table 4.

The IFS such as SIFS, PIFS, and DIFS will be additionally described as follows.

The IFS may be determined according to an attribute specified by the physical layer of the STA, regardless of the bit rate of the STA. Among the interframe spaces (IFS), the rest except for the AIFS may use a preset value for each physical layer.

The AIFS may be set to a value corresponding to the four types of transmission queues mapped with the user priority, as shown through Table 5.

The SIFS has the shortest time gap among the above-mentioned IFS. Accordingly, it may be used when a STA occupying the wireless medium needs to maintain the occupancy of the medium without interference by another STA in a duration in which a frame exchange sequence is performed.

That is, by using the smallest gap between transmissions within the frame exchange sequence, priority may be given to completing the ongoing frame exchange sequence. In addition, the STA that accesses the wireless medium using the SIFS may immediately start transmission at the SIFS boundary without determining whether the medium is busy.

The duration of the SIFS for a specific physical (PHY) layer may be defined by the aSIFSTime parameter. For example, in the physical layer (PHY) of the IEEE 802.11a, IEEE 802.11g, IEEE 802.11n, and IEEE 802.11ac standards, the SIFS value is 16 us.

The PIFS may be used to provide the STA with the next highest priority after the SIFS. That is, the PIFS may be used to obtain priority for accessing the wireless medium.

The DIFS may be used by a STA that transmits a data frame (MPDU) and a management frame (Mac Protocol Data Unit; MPDU) based on the DCF. If it is determined that the medium is in an idle state through the carrier sense (CS) mechanism after the received frame and the backoff time expire, the STA may transmit a frame.

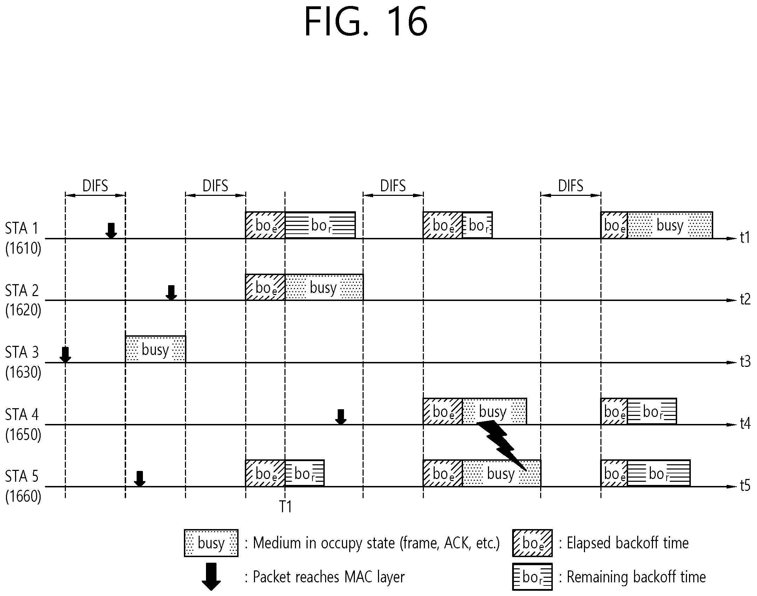

FIG. 16 illustrates a backoff operation.

Each STA 1610, 1620, 1630, 1640, 1650 may individually select a backoff value for the backoff operation/procedure. Then, each STA may attempt transmission after waiting for a time (i.e., a backoff window) representing the selected backoff value in units of slot time. In addition, each STA may count down the backoff window in units of slot time. The countdown operation for channel access to the wireless medium may be individually performed by each STA.

The time corresponding to the backoff window may be referred to as a random backoff time (T_{b}[i]). In other words, each STA may individually set the backoff time (T_{b}[i]) in the backoff counter of each STA.

Specifically, the backoff time (T_{b}[i]) is a pseudo-random integer value, and may be operated based on Equation 1 below. [Equation 1] ${T}_{b} \left[i\right] = Random \left(i\right) * SlotTime$

Random(i) of Equation 1 is a function that uses a uniform distribution and generates an arbitrary integer between 0 and CW[i]. CW[i] may be construed as a contention window selected between a minimum contention window (CWmin[i]) and a maximum contention window (CWmax[i]). The minimum contention window (CWmin[i]) and the maximum contention window (CWmax[i]) may correspond to CWmin[AC] and CWmax[AC], which are the default values of Table 5.

In the initial channel access, the STA may set CW[i] to CWmin[i] and select an arbitrary integer between 0 and CWmin[i] through Random(i). In the present embodiment, the selected arbitrary integer may be referred to as a backoff value.

i may be construed as the user priority of the traffic data. i of Equation 1 may be construed as corresponding to any one of AC_VO, AC_VI, AC_BE, or AC_BK according to Table 4.

The SlotTime of Equation 1 may be used to provide sufficient time so that the preamble of the transmitting STA can be sufficiently detected by neighboring STAs. The SlotTime of Equation 1 may be used to define the aforementioned PIFS and DIFS. As an example, the SlotTime may be 9 µs.

For example, when the user priority (i) is '7', the initial backoff time (T_{b}[AC_VO]) for the transmission queue of the AC_VO type may be a time in which a backoff value selected between 0 and CWmin[AC_VO] is expressed in units of SlotTime.

When a collision between STAs occurs according to the backoff operation/procedure (or when an ACK frame for the transmitted frame is not received), the STA may operate an increased backoff time (T_{b}[i]') based on Equation 2 below. [Equation 2] ${CW}_{new} \left[i\right] = \left(\left({CW}_{old}\left[i\right]+1\right)*PF\right) - 1$

Referring to Equation 2, a new contention window (CW_{new}[i]) may be operated based on a previous window (CW_{old}[i]). The PF value of Equation 2 may be calculated according to a procedure defined in the IEEE 802.11e standard. As an example, the PF value of Equation 2 may be set to '2'.

In the present embodiment, the increased backoff time (T_{b}[i]') may be construed as a time representing an arbitrary integer (i.e., a backoff value) selected between 0 and the new contention window (CW_{new}[i]) in units of slot time.

The CWmin[i], CWmax[i], AIFS[i], and PF values mentioned in FIG. 16 may be signaled from the AP through a QoS Parameter Set element, which is a management frame. The CWmin[i], CWmax[i], AIFS[i], and PF values may be values preset by the AP and the STA.

Referring to FIG. 16, when a specific medium changes from an occupied (occupy or busy) state to an idle state, a plurality of STAs may attempt data (or frame) transmission. At this time, as a way to minimize collisions between STAs, each STA may select the backoff time (T_{b}[i]) of Equation 1 and attempt transmission after waiting for the corresponding slot time.

When the backoff operation/procedure is initiated, each STA may count down the individually selected backoff counter time in units of slot time. Each STA may continuously monitor the medium while counting down.

If the wireless medium is monitored as being in the occupied state, the STA may stop the countdown and wait. If the wireless medium is monitored as being in the idle state, the STA may resume the countdown.

Referring to FIG. 16, when a frame for the third STA 1630 arrives at the MAC layer of the third STA 1630, the third STA 1630 may check whether the medium is in the idle state during the DIFS. Then, if the medium is determined to be in the idle state during the DIFS, the third STA 1630 may transmit a frame.

While the frame is transmitted from the third STA 1630, the remaining STAs may check the occupancy state of the medium and wait during the transmission interval of the frame. The frame may arrive at the MAC layer of each of the first STA 1610, the second STA 1620, and the fifth STA 1650. When the medium is checked to be in the idle state, each STA may count down the individual backoff time selected by each STA after waiting for the DIFS.

Referring to FIG. 16, it shows a case where the second STA 1620 selects the smallest backoff time and the first STA 1610 selects the largest backoff time. It shows a case where, at the time (T1) at which the backoff operation/procedure for the backoff time selected by the second STA 1620 is finished and frame transmission is started, the remaining backoff time of the fifth STA 1650 is shorter than the remaining backoff time of the first STA 1610.

When the medium is occupied by the second STA 1620, the first STA 1610 and the fifth STA 1650 may suspend the backoff operation/procedure and wait. Then, when the medium occupancy of the second STA 1620 ends (i.e., the medium is again in the idle state), the first STA 1610 and the fifth STA 1650 may wait for the DIFS.

Then, the first STA 1610 and the fifth STA 1650 may resume the backoff operation/procedure based on the suspended remaining backoff time. In this case, since the remaining backoff time of the fifth STA 1650 is shorter than the remaining backoff time of the first STA 1610, the fifth STA 1650 may complete the backoff operation/procedure earlier than the first STA 1610.

Meanwhile, referring to FIG. 16, when the medium is occupied by the second STA 1620, a frame for the fourth STA 1640 may arrive at the MAC layer of the fourth STA 1640. When the medium becomes the idle state, the fourth STA 1640 may wait for the DIFS. Then, the fourth STA 1640 may count down the backoff time selected by the fourth STA 1640.

Referring to FIG. 16, the remaining backoff time of the fifth STA 1650 may coincidentally match the backoff time of the fourth STA 1640. In this case, a collision may occur between the fourth STA 1640 and the fifth STA 1650. When a collision between STAs occurs, both the fourth STA 1640 and the fifth STA 1650 do not receive an ACK, and data transmission may fail.

Accordingly, the fourth STA 1640 and the fifth STA 1650 may individually operate a new contention window (CW_{new}[i]) according to Equation 2 above. Then, the fourth STA 1640 and the fifth STA 1650 may individually perform the countdown for the backoff time newly operated according to Equation 2 above.

Meanwhile, when the medium is in the occupied state due to the transmission of the fourth STA 1640 and the fifth STA 1650, the first STA 1610 may wait. Then, when the medium becomes the idle state, the first STA 1610 may resume the backoff counting after waiting for the DIFS. When the remaining backoff time of the first STA 1610 elapses, the first STA 1610 may transmit a frame.

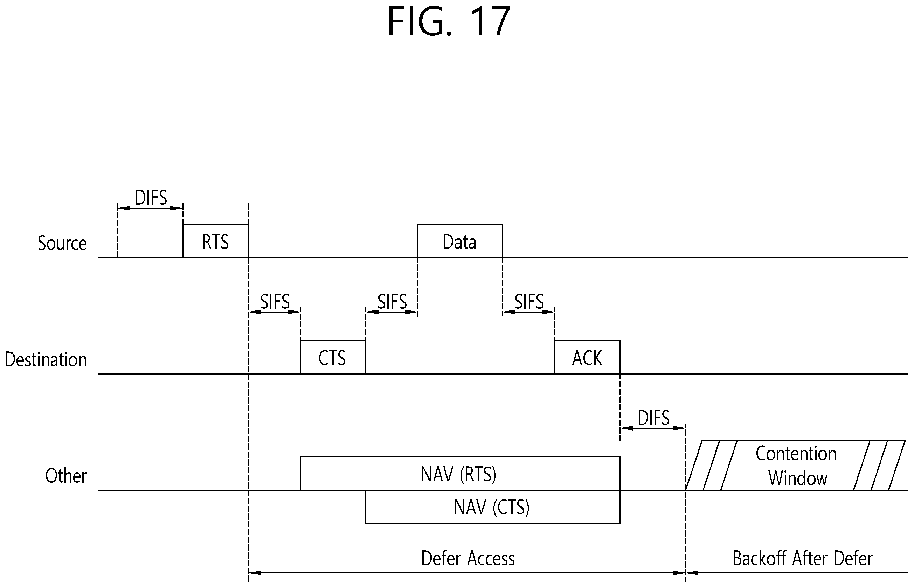

FIG. 17 illustrates an example of a procedure related to NAV setting.

Referring to FIG. 17, when a Source (e.g., an AP STA/non-AP STA) intending to transmit data transmits a request-to-send (RTS) frame to a Destination (e.g., an AP STA/non-AP STA) receiving the data, the Destination can transmit a clear-to-send (CTS) frame to neighboring stations to notify them that it will receive the data. In other words, the Destination designated as the receiver through the RTS frame can transmit a CTS frame. If the Source that transmitted the RTS frame receives the CTS frame, the Source can initiate data transmission to the Destination.

Meanwhile, if a STA other than the Destination designated as the receiver through the RTS frame receives the RTS frame, or if a STA other than the Source that transmitted the RTS frame receives the CTS frame, the STA can configure a network allocation vector (NAV). A STA that has set a NAV may not transmit data during the NAV period, which allows the STA to avoid collisions between the STA and the Source/Destination. On the other hand, if the Destination designated as the receiver through the RTS frame receives the RTS frame, or if the Source that transmitted the RTS frame receives a CTS frame, the Source/Destination does not set a NAV.

If a CTS frame (e.g., PHY-RXSTART.indication primitive) is not received within a certain period from the time the RTS frame is received (e.g., the time when the MAC receives the PHY-RXEND.indication primitive corresponding to the RTS frame), STAs that have set or updated a NAV through the RTS frame may reset the NAV (e.g., to 0). The certain period may be (2*aSIFSTime + CTS_Time + aRxPHYStartDelay + 2*aSlotTime). The CTS_Time can be calculated based on the length and data rate of the CTS frame indicated by the RTS frame.

For convenience of description, FIG. 17 illustrates setting or updating the NAV through the RTS frame or the CTS frame. However, NAV setting/resetting/updating can also be performed based on the duration field of various other frames, such as non-HT PPDU, HT PPDU, VHT PPDU, or HE PPDU (e.g., the duration field in the MAC header of a MAC frame). For example, if the RA field in a received MAC frame does not match its own address (e.g., MAC address), The STA may set, reset, or update the NAV based on the value of the Duration field in the received MAC frame.

A non-AP STA shall maintain two NAVs, and an AP may maintain two NAVs: an intra-BSS NAV and a basic NAV. The intra-BSS NAV may be updated/set by an intra-BSS PPDU. The basic NAV may be updated /set by an inter-BSS PPDU or a PPDU that cannot be classified as intra-BSS or inter-BSS.

The MAC frames included in the data field of the PPDU of the present disclosure can be classified into various types. For example, the MAC frames of the present disclosure can be classified into control frames, management frames, and data frames.

For example, the management frame includes Association Request, Association Response, Reassociation Request, Reassociation Response, Probe Request, Probe Response, Beacon, Disassociation, Authentication, and Deauthentication frames/signals defined in conventional WLANs. For the management frame, the value of the type field (B3 and B2) of the MAC header is set to 00. Additionally, the values of the subtype fields (B7, B6, B5, B4) of the MAC header are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) of the MAC header are set to 01. Additionally, the values of the subtype fields (B7, B6, B5, B4) of the MAC header are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For this data frame, the values of the type fields (B3 and B2) of the MAC header are set to 10.

The type of the MAC frame used in the present disclosure may be identified through the type field/information and the subtype field/information included in the frame control field of the header of the MAC frame (i.e., the MAC header). For example, the "trigger frame" of the present disclosure may mean a MAC frame in which the type bits B3 and B2 in the frame control field of the MAC header are set to 01, and the subtype bits B7, B6, B5, and B4 in the frame control field are also set to 0010. Various MAC frames described in the present disclosure are inserted/included in the data field of various PPDUs (e.g., HE/VHT/HE/EHT/UHR PPDUs).

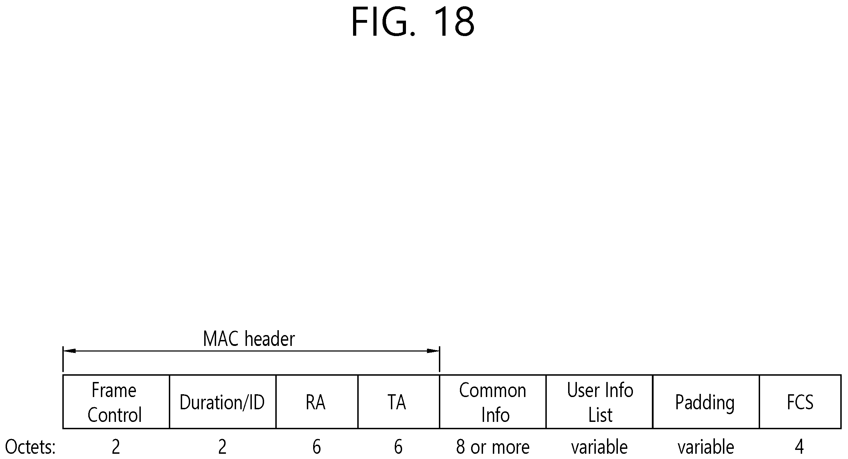

FIG. 18 illustrates a trigger frame format. The trigger frame format may also be referred to as the structure of a trigger frame.

Referring to FIG. 18, a trigger frame may include a frame control field, a duration/ID field, a receiver address (RA) field, a transmitter address (TA) field, a Common Info field, a User Info list field, a padding field, and/or a frame check sequence (FCS) field. Optionally, the trigger frame may further comprise a special User Info field between the Common Info field and the User Info list field. The User Info list field may include one or more User Info fields. The frame control field, duration/ID field, RA field, and TA field may constitute a MAC header.

For example, the common information field may comprise a trigger type subfield. The value of the trigger type subfield may indicate a variant of the trigger frame as shown in <Table 1>:

**[Table 1]**

| **Trigger type subfield value** | **Trigger frame variant** |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Ranging |
| 9-15 | Reserved |

For example, if the value of the trigger type subfield is set to 0, the trigger frame may be a basic trigger frame. For example, if the value of the trigger type subfield is set to 3, the trigger frame may be a multi-user (MU) RTS trigger frame. Meanwhile, according to the EHT (i.e., 802.11be) standard, an AP can allocate a portion of the time duration within the TXOP obtained by the AP to support peer-to-peer (P2P) transmission to a non-AP STA. To allocate a portion of the time duration within a TXOP, a TXOP Sharing Mode subfield may be defined within the Common Info Field of the MU-RTS Trigger frame. When the value of the TXOP Sharing Mode subfield is non-zero, such a MU-RTS trigger frame may be referred to as a MU-RTS TXOP Sharing (TXS) Trigger frame (TF). A description of the values of the TXOP sharing mode subfield is shown in <Table 2> below:

**[Table 2]**

| **Triggered TXOP Sharing Mode subfield value** | **Description** |
|---|---|
| 0 | MU-RTS that does not initiate MU-RTS TXOP sharing procedure. |
| 1 | MU-RTS that initiates MU-RTS TXOP sharing procedure wherein a scheduledSTA can only transmit MPDU(s) addressed to its associated AP. |
| 2 | MU-RTS that initiates MU-RTS TXOP sharing procedure wherein a scheduled STA can transmit MPDU(s) addressed to its associated AP or addressed to another STA. |
| 3 | Reserved. |

For example, if the TXOP sharing mode subfield has a value of 1, one or more (non-TB) PPDU transmissions to the AP can be supported. If the TXOP sharing mode subfield has a value of 2, both (non-TB) PPDU transmission to the AP and P2P transmission can be supported. In this disclosure, the MU-RTS TXS TF may also be referred to simply as a TXS trigger frame.

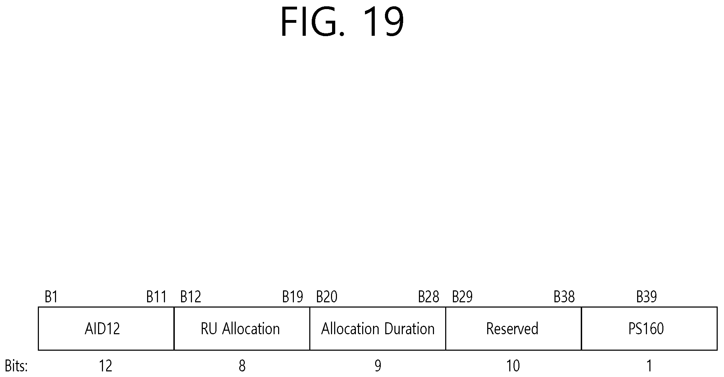

FIG. 19 illustrates an example of the User Info field format of the MU-RTS TXS TF.

Referring to FIG. 19, the User Info field may include an AID subfield, an RU allocation subfield, an allocation duration subfield, reserved bits, and/or a PS160 subfield.

The AID subfield may indicate the AID for the corresponding STA. The RU allocation subfield may indicate RU allocation for the corresponding STA.

The allocation duration subfield may include 9 bits from B20 to B28 in the MU-RTS TXS TF and may indicate an allocation duration in 16us units. In this case, the maximum length of the allocation duration indicated by the allocation duration subfield may be 2^9 = 8192 us.

The PS160 subfield may indicate the primary 160 MHz channel or the secondary 160 MHz channel to which RU or MRU allocation applies.

Meanwhile, many APs are being installed adjacent to each other to enable STAs to maintain continuous WLAN connections over a wider area. However, overlapping BSSs of multiple APs can lead to issues such as radio interference and transmission collisions between APs. To address these issues, various technologies related to coordination between APs in the frequency, time, and spatial domains (e.g., RU selection, joint transmission, nulling) have been proposed. Various issues that may arise during inter-AP coordination need to be addressed.

In the present disclosure, a multi-AP operation is proposed. The multi-AP operation may be based on a technique of reducing various interferences such as inter-symbol interference (ISI) through coordination with a neighboring AP (for example, an AP located in an overlapping BSS).

For example, the multi-AP operation may be classified into a multi-AP coordination scheme (or, a coordination scheme) based on various techniques/types/formats/protocols. For example, the coordination scheme may include coordinated TDMA (Co-TDMA) that distinguishes radio resources allocated to several APs based on a time axis (time domain). Additionally or alternatively, the coordination scheme may include coordinated OFDMA (C-OFDMA) that distinguishes radio resources allocated to several APs based on a frequency axis (time domain). Additionally or alternatively, the coordination scheme may include coordinated spatial reuse (Co-SR) that applies spatial reuse (SR) to at least one AP. Additionally or alternatively, the coordination scheme may include coordinated beamforming (Co-BF)/nulling that transmits by nulling interference occurring in a neighbor (for example, an adjacent AP/STA, and/or OBSS AP/OBSS STA). Additionally or alternatively, the coordination scheme may include AP selection in which an AP having a good channel state among adjacent APs (for example, at least one AP located in a BSS or OBSS and having an excellent channel state) performs transmission. Additionally or alternatively, the coordination scheme may include joint transmission (JTX) or JT in which a plurality of APs (for example, a plurality of APs included in the same BSS/OBSS, or a plurality of APs included in mutually different BSSs/OBSSs) simultaneously perform transmission and reception by coordinating, and JTX/JT may be implemented based on joint beamforming or joint MU-MIMO.

In the present disclosure, "multi-AP (coordination) operation" may also be referred to as "multi-AP (coordination) transmission". In addition, "multi-AP (coordination) operation/transmission" and "multi-AP coordination scheme (or, coordination scheme)" may be used interchangeably.

When the triggered TXOP sharing protocol is utilized for multi-AP coordination, transmissions within the BSS of each coordinating AP are divided into time units, so that each coordinating AP can perform frame exchange without affecting other coordinating APs.

In this disclosure, "frame exchange (FE)" may include a frame transmission and/or reception operation between STAs. The STA may be an AP or a non-AP STA. Herein, a frame may include various types of frames (e.g., a data frame, a control frame, and a management frame).

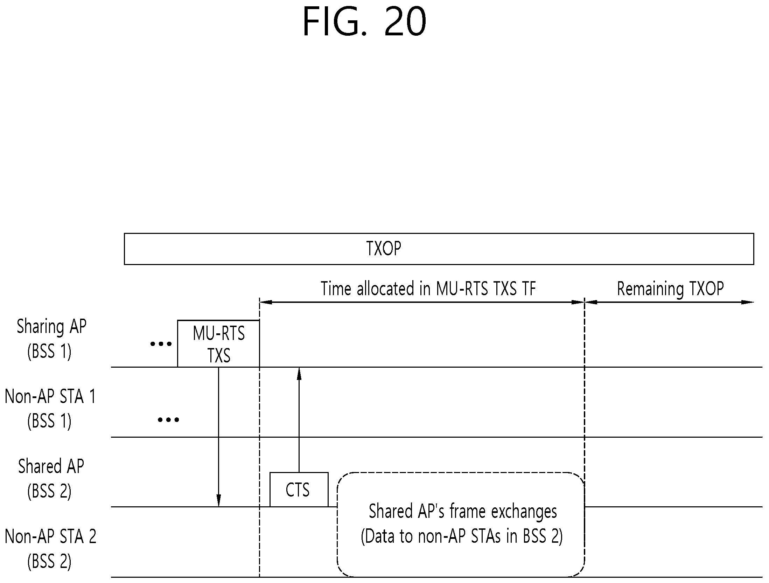

FIG. 20 shows an example of an operation diagram of single TXOP-based coordinated time division multiple access (Co-TDMA) between coordinating APs.

For example, C-TDMA can mean that each coordinating AP exchanges frames without affecting other coordinating APs by dividing transmissions within the BSS of each coordinating AP by time units.

When the triggered TXS protocol is applied to multi-AP coordination operations, the AP in the triggered TXS protocol may be the AP that shares the TXOP in the multi-AP coordination operation, and the STA in the triggered TXS protocol may be the AP that is granted the shared TXOP in the multi-AP coordination operation. In this disclosure, the AP that shares the TXOP may be referred to as a sharing AP (SAP), and the AP that is granted the TXOP by the SAP may be referred to as a shared AP (DAP). The term "SAP" here does not limit the entities sharing the TXOP to only AP STAs - the SAP may also include non-AP STAs that share the TXOP. Furthermore, the term "DAP" does not limit the entity that is granted the shared TXOP to only being an AP STA, and a DAP may also include non-AP STAs that is granted the shared TXOP (or, that transmit and receive with an AP STA that is granted the shared TXOP). Furthermore, frame exchanges performed by a DAP with non-AP STAs belonging to the DAP BSS or SAPs during the allocated time (i.e., the time allocated by the MU-RTS TXS TF in FIG. 19, which is an allocation duration for the DAP/AP2 within a TXOP indicated by the MU-RTS TXS TF transmitted from the SAP) may be referred to as BSS frame exchanges (FEs) of the DAP. For example, RTS/CTS frame exchanges between a DAP and a non-AP STA followed by data frame transmission and block ACK frame responses, UL data frame transmissions by non-AP STAs based on trigger frames transmitted from the DAP, and/or data frame transmissions by the DAP based on trigger frames transmitted from the SAP may be performed.

In order for multi-AP coordination to be achieved between two APs, the two APs may be in a connected/associated state with each other, and/or after performing a negotiation procedure for exchanging coordination request frame/coordination response frame including capability information/requirement information of each other in advance, may perform multi-AP transmission (e.g., coordinated time division multiple access (Co-TDMA), coordinated orthogonal frequency division multiple access (C-OFDMA), coordinated spatial reuse (Co-SR), coordinated beamforming (Co-BF), AP selection, or joint transmission (Jo-TX)) based on the obtained information. That is, in order for the multi-AP transmission to be smoothly performed, the configuration/management of the multi-AP coordination, and/or a negotiation procedure for transmission based on a specific multi-AP coordination scheme need to be performed in advance between the SAP and the DAP described above. Through the negotiation procedure, a multi-AP set may be established/configured. Therefore, the negotiation procedure may also be referred to as a multi-AP set establishment/configuration procedure.

In order for multi-AP coordination to be successfully performed, a multi-AP selection procedure (or, AP selection procedure for multi-AP coordination) for selecting a DAP with which the SAP intends to share a TXOP within a multi-AP set configured/established through a negotiation procedure, and/or for notifying that the TXOP is scheduled to be shared may be performed. Through the multi-AP selection procedure, the SAP may determine whether a TXOP sharing to the DAP is required within the obtained TXOP, and when a TXOP sharing to a specific DAP is not required, may determine a TXOP sharing to a subsequent/other DAP. Alternatively, the SAP may simply notify the target DAP that the TXOP is scheduled to be shared in the multi-AP selection procedure, and through this, may perform multi-AP coordination while reducing an overhead caused by the multi-AP selection procedure.

In the multi-AP selection procedure, the SAP may transmit, to one or more DAPs, a request frame (i.e., a request frame for an AP selection/selection request frame) for selecting a DAP to share a TXOP from the multi-AP set configured/established through the negotiation procedure, and the one or more DAPs receiving the request frame may transmit a response frame to the request frame (i.e., a response frame for an AP selection/selection response frame) based on whether a TXOP sharing is required. When receiving a response frame comprising an indication that a TXOP sharing is not required from the DAP(s), or when failing to receive a response frame from the DAP(s), the SAP may transmit a request frame for an AP selection to another DAP - that is, the SAP may perform an AP reselection. Alternatively, the SAP may simply notify the target DAP that the TXOP is scheduled to be shared in the multi-AP selection procedure. For example, the SAP may transmit an AP selection request frame that does not solicit a response frame to the target DAP with which the SAP intends to share the TXOP, and the DAP receiving such an AP selection request frame may prepare an operation for the scheduled TXOP sharing.

The SAP may transmit a frame for a TXOP sharing (e.g., a TXOP sharing frame/MU-RTS TXS trigger frame) to the DAP selected through the multi-AP selection procedure, and the DAP may perform a frame exchange with a non-AP STA(s) associated with the DAP in a time duration (e.g., an allocation duration) allocated by the TXOP sharing frame.

In order for each STA to perform frame exchange, it must occupy a medium through channel access (CA). That is, all STAs basically listen to the primary channel of the BSS and first perform clear channel assessment (CCA) on the primary channel. Specifically, when the primary channel is in an IDLE state and the back-off counter (BC) becomes 0, each STA may transmit a frame through the primary channel and a secondary channel that is in an IDLE state.

Examples of the primary channel and the secondary channel referred to in the present disclosure are as follows:
P20: primary 20 MHz channel
S20: secondary 20 MHz channel (when the bandwidth is 40 MHz, it means that another 20 MHz other than P20 is the secondary channel)
S40: secondary 40 MHz channel (when the bandwidth is 80 MHz, it means that another 40 MHz other than P20/S20 is the secondary channel)
S80: secondary 80 MHz channel (when the bandwidth is 160 MHz, it means that another 80 MHz other than P20/S20/S40 is the secondary channel)
S160: secondary 160 MHz channel (when the bandwidth is 320 MHz, it means that another 160 MHz other than P20/S20/S40/S80 is the secondary channel)
S320: secondary 320 MHz channel (when the bandwidth is 640 MHz, it means that another 320 MHz other than P20/S20/S40/S80/S160 is the secondary channel)

For example, a STA having a BSS operating channel width of an 80 MHz bandwidth may wait until P20 becomes the IDLE state without reducing the BC if P20 is in the BUSY state due to a result of CCA and/or NAV setting. Thereafter, when P20 becomes the IDLE state, the BC is reduced through the backoff process, and when the BC becomes 0, the STA may perform CCA on S20 and S40 and, if it is determined to be in the IDLE state, transmit a PPDU through the 80 MHz bandwidth.

Such a mechanism based on the primary channel has an advantage that the frame exchange between the AP and the non-AP STAs is protected without interference, but when the primary channel is in the BUSY state, the secondary channel in the IDLE state cannot be used, so the medium may be wasted. Therefore, secondary channel access (SCA) capable of reducing the waste of the medium by accessing the secondary channel when the primary channel is in the BUSY state may be considered.

When SCA is applied to the Co-TDMA operation, the AP/STAs (e.g., the AP/STAs belonging to BSS2 in FIG. 20) that receive the frame delivered from the SAP before TXOP sharing is performed/started may occupy the secondary channel by performing SCA, so the Co-TDMA-based transmission may not be properly performed.

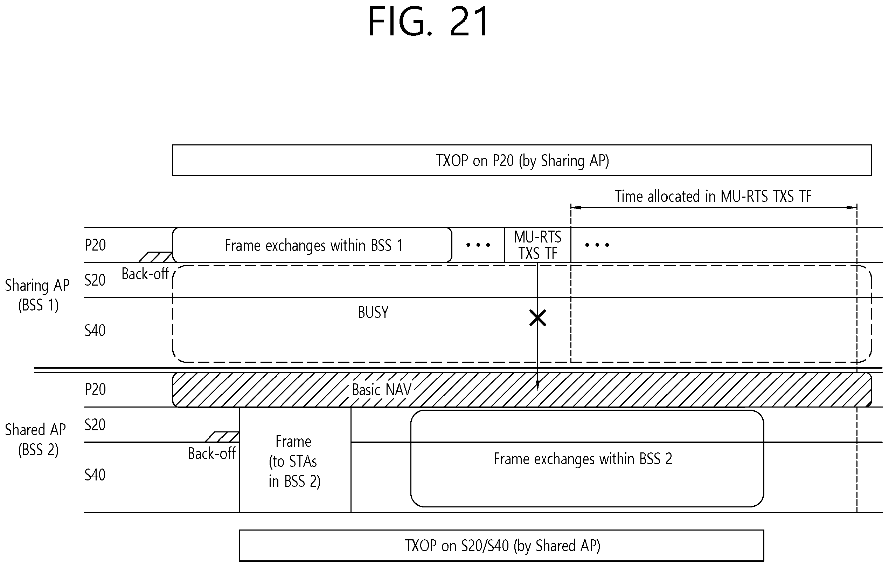

FIG. 21 illustrates an example of SCA performed in the Co-TDMA operation.

Referring to FIG. 21, the SAP may perform backoff to occupy the medium and obtain a TXOP, and perform individual frame exchange. In this case, the DAP(s) recognizing that the corresponding medium is in the BUSY state and/or the non-AP STA(s) associated with the DAP may perform frame exchange on the secondary channel using SCA for a time not exceeding the entire TXOP duration obtained by the SAP on P20. However, if the corresponding SAP had intended to share the TXOP to the DAP for the Co-TDMA-based transmission within the obtained TXOP, the DAP may not receive the MU-RTS TXS TF delivered from the SAP. That is, the SAP may be regarded as having performed unnecessary TXOP sharing to the AP performing SCA.

Therefore, the present disclosure provides a method/apparatus in which SCA-capable AP/STAs disable an SCA capability for multi-AP coordination-based transmission. Specifically, the APs that intend to perform the Co-TDMA-based transmission through the negotiation procedure for multi-AP coordination may instruct the STAs associated with them not to perform SCA during the coordinated negotiation duration. Through this, the APs participating in the multi-AP coordination may not perform an unnecessary TXOP sharing procedure and/or multi-AP selection procedure, and/or may successfully perform the Co-TDMA-based transmission.

The specific designations (names) proposed in the present disclosure may be changed and are not limited thereto.

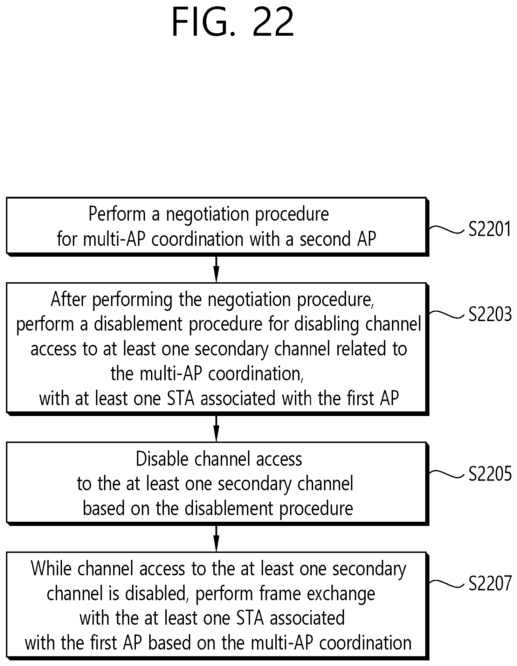

FIG. 22 illustrates an example of a method performed by an AP for channel access in a multi-AP operation according to an embodiment of the present disclosure.

Referring to FIG. 22, in step S2201, a first AP may perform a negotiation procedure for multi-AP coordination with a second AP.

In step S2203, after performing the negotiation procedure, the first AP may perform a disablement procedure for disabling channel access to at least one secondary channel related to the multi-AP coordination, with at least one STA associated with the first AP.

In step S2205, the first AP may disable channel access to the at least one secondary channel based on the disablement procedure.

In step S2207, while channel access to the at least one secondary channel is disabled, the first AP may perform frame exchange with the at least one STA associated with the first AP based on the multi-AP coordination.

According to various embodiments, in the disablement procedure, the first AP may transmit, to the at least one STA, a request frame including information related to disabling of channel access to the at least one secondary channel. The first AP may receive, from the at least one STA, a response frame to the request frame.

According to various embodiments, the information related to disabling of channel access to the at least one secondary channel may include at least one of capability information for secondary channel access (SCA), information for whether the first AP performs SCA, information for a period during which SCA is disabled, information for an SCA bandwidth, information for an SCA channel, or information for a threshold applied to clear channel assessment (CCA) for SCA.

According to various embodiments, channel access to the at least one secondary channel may be disabled based on the request frame being transmitted or the response frame being received.

According to various embodiments, the at least one secondary channel related to the multi-AP coordination may be included in at least one channel on which an operation based on the multi-AP coordination is performed, or may be related to a primary channel on which an operation based on the multi-AP coordination is performed.

According to various embodiments, at least one of information for the at least one channel on which the operation based on the multi-AP coordination is performed or information for the primary channel on which the operation based on the multi-AP coordination is performed may be obtained in the negotiation procedure.

According to various embodiments, for a frame exchange based on the multi-AP coordination, the first AP receive, from the second AP, a transmission opportunity (TXOP) sharing frame including information for an allocation duration within a TXOP period, and perform a frame exchange with the at least one STA associated with the first AP in the allocation duration.

According to various embodiments, channel access to the at least one secondary channel may be disabled until an enablement procedure for enabling channel access to the at least one secondary channel is performed.

According to various embodiments, the first AP may obtain information related to the multi-AP coordination in the negotiation procedure.

According to various embodiments, the first AP may determine to perform the disablement procedure based on the information related to the multi-AP coordination.

According to various embodiments, the information related to the multi-AP coordination may include at least one of information for a coordination scheme related to the multi-AP coordination, information for an operating channel related to the multi-AP coordination, information for an operating bandwidth related to the multi-AP coordination, information for a transmission opportunity (TXOP) required in the multi-AP coordination, information for a TXOP sharing time expected/scheduled by the SAP (i.e., an expected TXOP sharing time), information for an entire transmission opportunity (TXOP) obtained/scheduled by the SAP for the Co-TDMA operation, or information for low latency traffic related to the multi-AP coordination.

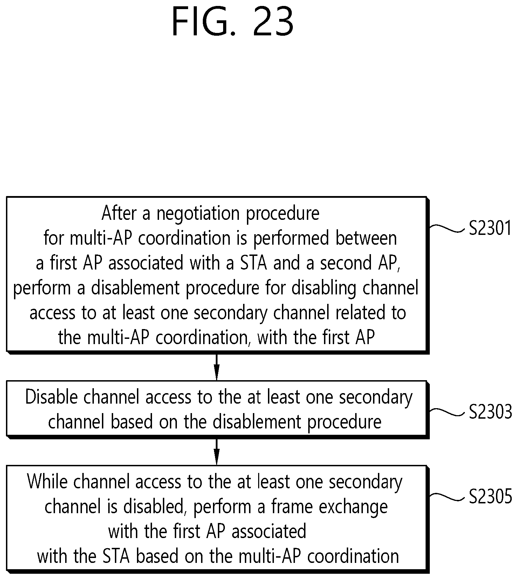

FIG. 23 illustrates an example of a method performed by a STA for channel access in a multi-AP operation according to an embodiment of the present disclosure.

Referring to FIG. 23, in step S2301, after a negotiation procedure for multi-AP coordination is performed between a first AP associated with a STA and a second AP, the STA may perform a disablement procedure for disabling channel access to at least one secondary channel related to the multi-AP coordination, with the first AP.

In step S2303, the STA may disable channel access to the at least one secondary channel based on the disablement procedure.

In step S2305, while channel access to the at least one secondary channel is disabled, the STA may perform a frame exchange with the first AP associated with the STA based on the multi-AP coordination.

According to various embodiments, the STA may receive, from the first AP, a request frame including information related to disabling of channel access to the at least one secondary channel. The STA may transmit, to the first AP, a response frame to the request frame.

According to various embodiments, the information related to disabling of channel access to the at least one secondary channel may include at least one of capability information for secondary channel access (SCA), information for whether the first AP performs SCA, information for a period during which SCA is disabled, information for an SCA bandwidth, information for an SCA channel, or information for a threshold applied to clear channel assessment (CCA) for SCA.

According to various embodiments, channel access to the at least one secondary channel may be disabled based on the request frame being transmitted or the response frame being received.

According to various embodiments, the at least one secondary channel related to the multi-AP coordination may be included in at least one channel on which an operation based on the multi-AP coordination is performed, or is related to a primary channel on which an operation based on the multi-AP coordination is performed.

According to various embodiments, channel access to the at least one secondary channel may be disabled until an enablement procedure for enabling channel access to the at least one secondary channel is performed.

Hereinafter, a detailed implementation regarding channel access in a multi-AP operation is described.

The present disclosure provides a method/apparatus for disabling an SCA capability in order for SCA-capable AP/STAs to successfully participate in multi-AP coordination-based transmission. For example, the present disclosure provides information necessary for an AP and a non-AP STA to perform SCA and a method of announcing the corresponding information. For example, the present disclosure provides a negotiation procedure for multi-AP coordination and Co-TDMA. For example, the present disclosure provides an SCA disablement method for multi-AP coordination.

According to various embodiments of the present disclosure, STAs capable of performing SCA may disable the SCA capability in advance for the Co-TDMA-based transmission.

### I. Announcement procedure for SCA

In order for an AP and a STA to switch to a secondary channel (SCH) and exchange frames, the AP basically must instruct the STA on whether to perform SCA and/or must negotiate with the STA on whether to perform SCA. Such information for the announcement and/or negotiation for SCA may be included in an operation information element for a UHR STA within a management frame including a beacon, a probe response, and/or a (re)association response frame transmitted by the AP, and/or may be included in a separately defined new information element (IE). The STA may include the information for the announcement and/or negotiation in an operation information element for UHR and/or a separately defined new IE within a management frame including a probe request and/or a (re)association request frame.

Alternatively, a separate announcement procedure and/or negotiation procedure for determining whether to perform SCA may be performed in addition to the association situation between the AP and the STA. For this, a new action frame may be defined and/or a trigger frame (e.g., MU-RTS TF) may be utilized for transmission to a plurality of STAs. In the present disclosure, the frame for determining whether to perform SCA may include an SCA mode request frame/SCA mode response frame.

In various embodiments, the SCA mode request frame/SCA mode response frame may include at least one of the following contents:
A. Secondary channel access capability: indicates whether there is a capability to perform SCA.

In some implementations, a QoS Characteristics element included in the SCS request/response frame may be utilized for the secondary channel access capability field. For example, a reserved bit (3 bits) within a control information field of the QoS Characteristics element may be utilized for the secondary channel access capability field, and among the reserved bits, 1-bit signaling for indicating the SCA capability information may be defined. For example, i) a bit value of 0 may indicate that the corresponding STA does not have the SCA capability, and a bit value of 1 may indicate that the corresponding STA has the SCA capability.

B. Secondary channel access mode: indicates whether a STA having the secondary channel access capability (i.e., the value of the secondary channel access capability field is set to 1) is to perform SCA.

In some implementations, a QoS Characteristics element included in the QoS data frame may be utilized for the secondary channel access mode field. For example, a reserved bit (3 bits) within the control information field of the QoS Characteristics element may be utilized for the secondary channel access mode field, and among the corresponding reserved bits, 1-bit signaling for indicating the SCA mode information may be defined. For example, i) a bit value of 0 may indicate that the corresponding STA does not perform SCA, and ii) a bit value of 1 may indicate that the corresponding STA performs SCA.

A STA whose secondary channel access capability field is set to 1 must always indicate the secondary channel access mode value. In addition, when an AP whose secondary channel access capability field is set to 1 announces the secondary channel access mode field by setting it to 0, the STAs associated with the AP must set the secondary channel access mode field to 0 according to the announcement of the AP, and must not perform SCA.

The AP and the STA may exchange only the secondary channel access capability information in the negotiation procedure based on the beacon, probe request/response, and association request/response frames at the initial stage of association, and then set the value of the secondary channel access mode field to 0 as a default value. Thereafter, the AP and the STA may change the value of the secondary channel access mode field to 1 through the exchange of the SCA mode request/response frame to enable the SCA mode. At this time, the STA (e.g., an AP and/or a non-AP STA) that has received the SCA mode request frame in which the secondary channel access mode field is set to 1 must always indicate 0 or 1 for its own SCA mode.

C. Secondary channel access disabled count: indicates a duration during which a STA that has the SCA capability but does not perform SCA maintains SCA in a disabled state.

In some implementations, a new field including an SCA disabled count value may be defined. For example, an SCA disabled count field may be newly defined to indicate a duration during which the STA maintains SCA in a disabled state. At this time, the duration during which SCA is maintained in the disabled state may be indicated in units of us/units of time unit (TU)/units of timing synchronization function (TSF), and each count may indicate a target beacon transmission time (TBTT).

For example, when the SCA disabled count field has a value of 0, the SCA disabled count field may mean that the corresponding STA maintains the disabled state until it transmits a separate SCA mode request frame to indicate whether its own SCA mode is enabled/disabled, regardless of time/duration.

For example, when the SCA disabled count field has a value of 1, the SCA disabled count field may mean that the corresponding STA will change its own SCA mode to the enabled state after 1 TBTT.

The AP and the STA may exchange only the secondary channel access capability information in the negotiation procedure based on the beacon, probe request/response, and association request/response frames at the initial stage of association, and then set the value of the secondary channel access disabled count field to 0 when the value of the secondary channel access mode field is set to 0 as a default value. Thereafter, the AP and the STA may change the value of the secondary channel access mode field to 1 through the exchange of the SCA mode request/response frame to enable the SCA mode. When a specific STA does not want to perform SCA for a purpose such as power saving, the corresponding STA may transmit an SCA mode request frame in which the value of the secondary channel access disabled count field and the value of the secondary channel access mode field are set to 0. The AP that has received such an SCA mode request frame may not transmit a frame to the corresponding STA when performing SCA during the duration indicated by the secondary channel access disabled count field.

D. Secondary channel access bandwidth: indicates a maximum PPDU bandwidth value that can be transmitted on the SCH when performing SCA. For example, the secondary channel access bandwidth information may be maximum bandwidth information of a PPDU transmitted by the STA performing SCA.

In some implementations, a new field serving the same role as the channel width field within the control field of the EHT operation information field may be defined, and the corresponding field may indicate the PPDU BW information of each STA.

For example, the secondary channel access bandwidth field set to a value of 0 may indicate a 20 MHz bandwidth. The secondary channel access bandwidth field set to a value of 1 may indicate a 40 MHz bandwidth. The secondary channel access bandwidth field set to a value of 2 may indicate an 80 MHz bandwidth. The secondary channel access bandwidth field set to a value of 3 may indicate a 160/80+80 MHz bandwidth. The secondary channel access bandwidth field set to a value of 4 may indicate a 320/160+160 MHz bandwidth. The remaining values of 5 to 7 may be reserved. As another example, at least one of the reserved values of 5 to 7 may indicate a 640 MHz bandwidth.

The bandwidth indicated by the secondary channel access bandwidth field (i.e., the secondary channel access bandwidth) must not be greater than the BSS operating channel width. Here, the BSS operating channel width may mean the maximum bandwidth in which the corresponding BSS operates.

E. Secondary channel access channels: indicates one or more secondary channels (e.g., a secondary channel on which backoff is performed) serving as a reference when performing SCA.

In some implementations, a new field for indicating the secondary channel access channels may be defined, and the corresponding field may indicate the secondary channel on which backoff is performed using a bitmap. For example, a bit set to 0 within the bitmap may indicate that backoff is not performed on the corresponding 20 MHz subchannel, and a bit set to 1 within the bitmap may indicate that backoff is performed on the corresponding 20 MHz subchannel. In addition, each bit within the corresponding bitmap may have the following correlation with the channel:

- For example, the first bit to the last bit may be considered to sequentially correspond to the 20 MHz channel of the lowest frequency to the 20 MHz channel of the highest frequency.

- For example, the first bit to the last bit may be considered to sequentially correspond to the 20 MHz channel of the highest frequency to the 20 MHz channel of the lowest frequency.

In some implementations, the secondary channel access channel field may indicate on which secondary channel backoff is performed based on the BSS operating channel width and/or the PPDU bandwidth. For example, a field serving the role of the CCSF0 field or the CCSF1 field within the EHT operation information field may be newly defined for SCA, and the corresponding field may indicate the frequency index/channel index of the secondary channel.

F. Secondary channel CCA threshold: indicates a threshold for CCA by which the AP/STA determines whether the SCH for SCA is IDLE/BUSY.

By CCA, when power equal to or greater than the indicated threshold is measured, the AP/STA may determine the corresponding secondary channel as BUSY. The lower the secondary channel CCA threshold, the higher the possibility that the channel is determined as BUSY even at low power.

For example, the secondary channel CCA threshold may be determined as one fixed or reference value (e.g., -82 dBm, -72 dBm). Alternatively, the secondary channel CCA threshold may be determined as a value obtained by adding (or subtracting) a differential (e.g., 4 dBm, 8 dBm) to a fixed value.

The secondary channel CCA threshold may be applied to a first-type CCA (e.g., power detection (PD)) and/or a second-type CCA (e.g., energy detection (ED)).

In various embodiments, the SCA mode response frame may include a status code including whether to accept/reject the request by the SCA mode request frame and/or a new proposal.

### II. Negotiation procedure for multi-AP coordination

According to various embodiments, the APs participating in the multi-AP coordination may determine whether to perform SCA in the multi-AP negotiation procedure. In the multi-AP negotiation procedure, the APs may exchange information required for performing the multi-AP coordination and/or the Co-TDMA operation, and may configure a multi-AP set/group for the multi-AP coordination based on the corresponding information.

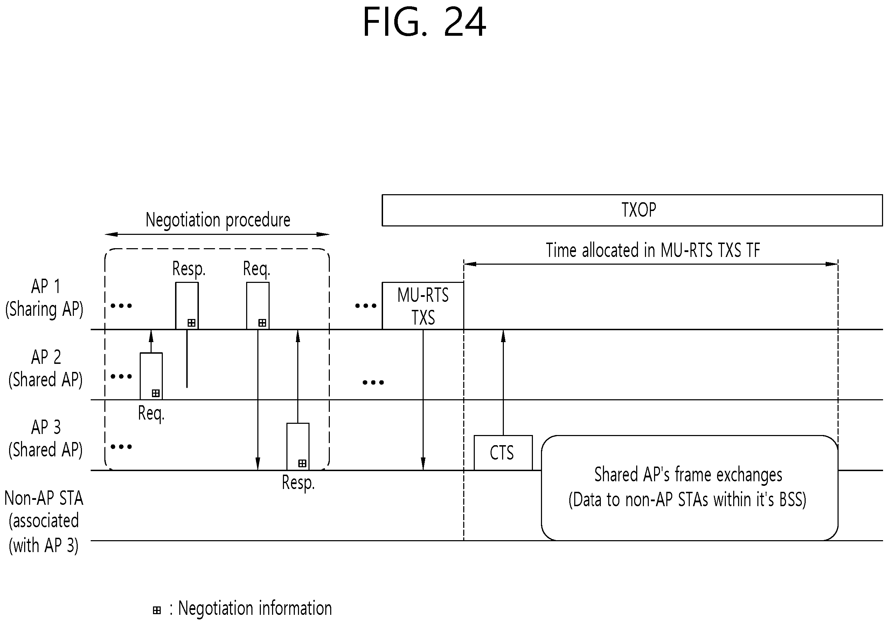

FIG. 24 illustrates an example of a negotiation procedure for a multi-AP operation according to an embodiment of the present disclosure.

Referring to FIG. 24, the APs may individually perform one-to-one negotiation with another AP. Each AP whose role of SAP or DAP is not determined before obtaining the TXOP may perform a preliminary negotiation procedure for multi-AP coordination by transmitting and receiving a coordination request frame for negotiation and/or a coordination response frame thereto with a neighboring AP. Through the negotiation procedure of exchanging the coordination request frame and/or the coordination response frame including information for the Co-TDMA operation, the APs that intend to perform the multi-AP coordination/Co-TDMA operation may obtain information related to each other. Specifically, each AP may determine whether the Co-TDMA-based transmission is supported and/or whether to perform the Co-TDMA-based transmission based on information for a multi-AP coordination type (e.g., a multi-AP coordination scheme such as C-OFDMA, Co-TDMA, Jo-TX, Co-SR). Therefore, a multi-AP subset and/or a multi-AP subgroup for the APs that intend to perform the Co-TDMA-based transmission may be configured, and the corresponding APs (e.g., the APs included in the multi-AP subset and/or the multi-AP subgroup) may perform an SCA disablement process for making the STAs in their own BSS not perform SCA during a duration in which the multi-AP coordination continues, a duration until a negotiation procedure for new multi-AP coordination is made, and/or until a separate SCA enablement process is performed.

### III. SCA disablement procedure for multi-AP coordination

In this section, an embodiment of a method in which STAs capable of performing SCA disable the SCA capability in advance for the Co-TDMA-based transmission is presented.

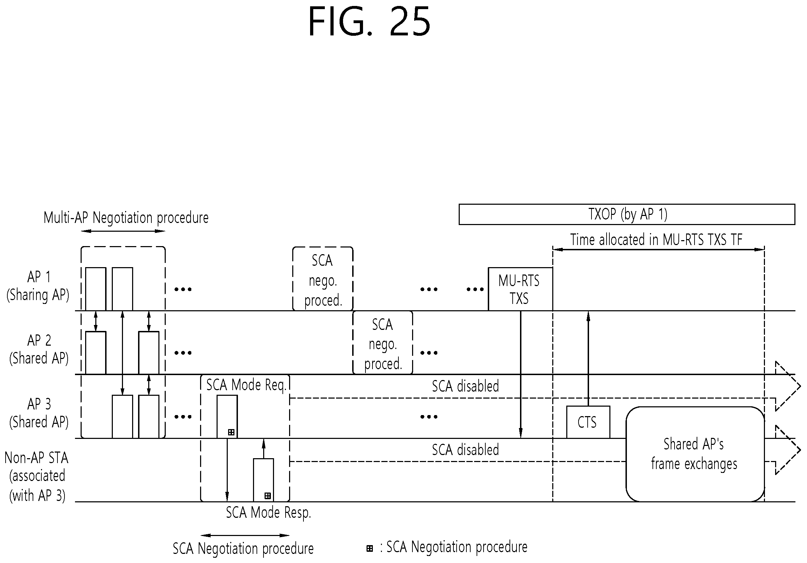

FIG. 25 illustrates an example of an SCA disablement procedure according to an embodiment of the present disclosure.

Referring to FIG. 25, the AP/STA may disable the SCA mode in advance for the expected multi-AP coordination-based transmission after performing the multi-AP negotiation procedure. Each AP that has performed the multi-AP negotiation procedure for the multi-AP coordination may selectively perform the SCA negotiation procedure according to the scheme of the multi-AP coordination to be performed. For example, AP 3 may perform the SCA negotiation procedure with the STAs in its own BSS after the multi-AP negotiation procedure for the Co-TDMA-based transmission. Through this, AP 3 and the STAs having the SCA capability in the BSS of AP 3 may disable the SCA mode until the duration and/or time negotiated/adjusted in the SCA negotiation procedure. Therefore, when AP 3 performs Co-TDMA with another AP during the scheduled multi-AP coordination duration, the failure of the Co-TDMA-based transmission due to SCA can be prevented, and unnecessary procedures in the multi-AP coordination can be omitted.

The technical features of the present disclosure described above can be applied to various devices and methods. For example, the technical features of the present disclosure described above can be performed/supported by the devices of FIG. 1 and/or FIG. 5. For example, the technical features of the present disclosure described above can be applied only to a part of FIG. 1 and/or FIG. 5. For example, the technical features of the present disclosure described above can be implemented based on the processing chips 114, 124 of FIG. 1, or implemented based on the processors 111, 121 and the memories 112, 122 of FIG. 1, or implemented based on the processor 510 and the memory 520 of FIG. 5.

For example, the processor 121 and/or processing chip 124 of FIG. 1 may be configured to execute instructions stored in the memory 122 to perform operations performed by the first AP in the present disclosure. The operations comprise: performing a negotiation procedure for multi-AP coordination with a second AP; after performing the negotiation procedure, performing a disablement procedure for disabling channel access to at least one secondary channel related to the multi-AP coordination, with at least one station (STA) associated with the first AP; disabling channel access to the at least one secondary channel based on the disablement procedure; and while channel access to the at least one secondary channel is disabled, performing frame exchange with the at least one STA associated with the first AP based on the multi-AP coordination.

For example, the processor 111, the processing chip 114 of FIG. 1 and/or the processor 510 of FIG. 5 may be configured to execute instructions stored in the memory 112, 520 to perform operations performed by the STA in the present disclosure. The operations comprise: after a negotiation procedure for multi-AP coordination is performed between a first access point (AP) associated with a station (STA) and a second AP, performing a disablement procedure for disabling channel access to at least one secondary channel related to the multi-AP coordination, with the first AP; disabling channel access to the at least one secondary channel based on the disablement procedure; and while channel access to the at least one secondary channel is disabled, performing frame exchange with the first AP associated with the STA based on the multi-AP coordination.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 122 of FIG. 1 and/or a separate external memory/storage medium/disk. The CRM may store instructions that perform operations performed by the first AP in the present disclosure based on being executed by a processor (e.g., the processor 121 and/or the processing chip 124 of FIG. 1). The operations comprise: performing a negotiation procedure for multi-AP coordination with a second AP; after performing the negotiation procedure, performing a disablement procedure for disabling channel access to at least one secondary channel related to the multi-AP coordination, with at least one station (STA) associated with the first AP; disabling channel access to the at least one secondary channel based on the disablement procedure; and while channel access to the at least one secondary channel is disabled, performing frame exchange with the at least one STA associated with the first AP based on the multi-AP coordination.

For example, the CRM may be the memory 112 of FIG. 1, the memory 520 of FIG. 5, and/or a separate external memory/storage medium/disk. The CRM may store instructions that perform operations performed by the STA in the present disclosure based on being executed by a processor (e.g., the processor 111, the processing chip 114 of FIG. 1, and/or the processor 510 of FIG. 5). The operations comprise: after a negotiation procedure for multi-AP coordination is performed between a first access point (AP) associated with a station (STA) and a second AP, performing a disablement procedure for disabling channel access to at least one secondary channel related to the multi-AP coordination, with the first AP; disabling channel access to the at least one secondary channel based on the disablement procedure; and while channel access to the at least one secondary channel is disabled, performing frame exchange with the first AP associated with the STA based on the multi-AP coordination.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, by performing the SCA disablement proposed in the present disclosure, APs participating in multi-AP coordination may selectively disable an SCA mode, and thus may successfully perform multi-AP coordination-based transmission on a primary channel (PCH).

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method comprising:
performing, by a first access point (AP), a negotiation procedure for multi-AP coordination with a second AP;
after performing the negotiation procedure, performing, by the first AP, a disablement procedure for disabling channel access to at least one secondary channel related to the multi-AP coordination, with at least one station (STA) associated with the first AP;
disabling, by the first AP, channel access to the at least one secondary channel based on the disablement procedure; and
while channel access to the at least one secondary channel is disabled, performing, by the first AP, frame exchange with the at least one STA associated with the first AP based on the multi-AP coordination.

2. The method of claim 1, wherein the performing of the disablement procedure comprises:
transmitting, by the first AP to the at least one STA, a request frame including information related to disabling of channel access to the at least one secondary channel; and
receiving, by the first AP from the at least one STA, a response frame to the request frame.

3. The method of claim 2, wherein the information related to disabling of channel access to the at least one secondary channel includes at least one of capability information for secondary channel access (SCA), information for whether the first AP performs SCA, information for a period during which SCA is disabled, information for an SCA bandwidth, information for an SCA channel, or information for a threshold applied to clear channel assessment (CCA) for SCA.

4. The method of claim 2, wherein channel access to the at least one secondary channel is disabled based on the request frame being transmitted or the response frame being received.

5. The method of claim 1, wherein the at least one secondary channel related to the multi-AP coordination is included in at least one channel on which an operation based on the multi-AP coordination is performed, or is related to a primary channel on which an operation based on the multi-AP coordination is performed.

6. The method of claim 5, wherein at least one of information for the at least one channel on which the operation based on the multi-AP coordination is performed or information for the primary channel on which the operation based on the multi-AP coordination is performed is obtained in the negotiation procedure.

7. The method of claim 1, wherein the performing, by the first AP, of the frame exchange with the at least one STA associated with the first AP based on the multi-AP coordination comprises:
receiving, by the first AP from the second AP, a transmission opportunity (TXOP) sharing frame including information for an allocation duration within a TXOP period; and
performing, by the first AP, frame exchange with the at least one STA associated with the first AP in the allocation duration.

8. The method of claim 1, wherein channel access to the at least one secondary channel is disabled until an enablement procedure for enabling channel access to the at least one secondary channel is performed.

9. The method of claim 1, further comprising:
obtaining, by the first AP, information related to the multi-AP coordination in the negotiation procedure; and
determining, by the first AP, to perform the disablement procedure based on the information related to the multi-AP coordination.

10. The method of claim 9, wherein the information related to the multi-AP coordination includes at least one of information for a coordination scheme related to the multi-AP coordination, information for an operating channel related to the multi-AP coordination, information for an operating bandwidth related to the multi-AP coordination, information for a transmission opportunity (TXOP) required in the multi-AP coordination, or information for low latency traffic related to the multi-AP coordination.

11. A first access point (AP) comprising:
a transceiver;
a memory; and
at least one processor operatively coupled to the transceiver and the memory,
wherein the memory stores instructions that, based on being executed by the at least one processor, perform operations comprising:
performing a negotiation procedure for multi-AP coordination with a second AP;
after performing the negotiation procedure, performing a disablement procedure for disabling channel access to at least one secondary channel related to the multi-AP coordination, with at least one station (STA) associated with the first AP;
disabling channel access to the at least one secondary channel based on the disablement procedure; and
while channel access to the at least one secondary channel is disabled, performing frame exchange with the at least one STA associated with the first AP based on the multi-AP coordination.

12. An apparatus comprising:
at least one processor; and
at least one memory operatively coupled to the at least one processor,
wherein the at least one memory stores instructions that, based on being executed by the at least one processor, perform operations comprising:
performing a negotiation procedure for multi-AP coordination with a second AP;
after performing the negotiation procedure, performing a disablement procedure for disabling channel access to at least one secondary channel related to the multi-AP coordination, with at least one station (STA) associated with the first AP;
disabling channel access to the at least one secondary channel based on the disablement procedure; and
while channel access to the at least one secondary channel is disabled, performing frame exchange with the at least one STA associated with the first AP based on the multi-AP coordination.

13. A non-transitory computer readable medium (CRM) having stored thereon a program code implementing instructions that, based on being executed by at least one processor, perform operations comprising:
performing a negotiation procedure for multi-AP coordination with a second AP;
after performing the negotiation procedure, performing a disablement procedure for disabling channel access to at least one secondary channel related to the multi-AP coordination, with at least one station (STA) associated with the first AP;
disabling channel access to the at least one secondary channel based on the disablement procedure; and
while channel access to the at least one secondary channel is disabled, performing frame exchange with the at least one STA associated with the first AP based on the multi-AP coordination.

14. A method comprising:
after a negotiation procedure for multi-AP coordination is performed between a first access point (AP) associated with a station (STA) and a second AP, performing, by the STA, a disablement procedure for disabling channel access to at least one secondary channel related to the multi-AP coordination, with the first AP;
disabling, by the STA, channel access to the at least one secondary channel based on the disablement procedure; and
while channel access to the at least one secondary channel is disabled, performing, by the STA, frame exchange with the first AP associated with the STA based on the multi-AP coordination.

15. A station (STA) comprising:
a transceiver;
a memory; and
at least one processor operatively coupled to the transceiver and the memory,
wherein the memory stores instructions that, based on being executed by the at least one processor, perform operations comprising:
after a negotiation procedure for multi-AP coordination is performed between a first access point (AP) associated with a station (STA) and a second AP, performing a disablement procedure for disabling channel access to at least one secondary channel related to the multi-AP coordination, with the first AP;
disabling channel access to the at least one secondary channel based on the disablement procedure; and
while channel access to the at least one secondary channel is disabled, performing frame exchange with the first AP associated with the STA based on the multi-AP coordination.

16. The STA of claim 15, wherein the performing of the disablement procedure comprises:
receiving, by the STA from the first AP, a request frame including information related to disabling of channel access to the at least one secondary channel; and
transmitting, by the STA to the first AP, a response frame to the request frame.

17. The STA of claim 16, wherein the information related to disabling of channel access to the at least one secondary channel includes at least one of capability information for secondary channel access (SCA), information for whether the first AP performs SCA, information for a period during which SCA is disabled, information for an SCA bandwidth, information for an SCA channel, or information for a threshold applied to clear channel assessment (CCA) for SCA.

18. The STA of claim 16, wherein channel access to the at least one secondary channel is disabled based on the request frame being transmitted or the response frame being received.

19. The STA of claim 15, wherein the at least one secondary channel related to the multi-AP coordination is included in at least one channel on which an operation based on the multi-AP coordination is performed, or is related to a primary channel on which an operation based on the multi-AP coordination is performed.

20. The STA of claim 15, wherein channel access to the at least one secondary channel is disabled until an enablement procedure for enabling channel access to the at least one secondary channel is performed.
